# EUROPÄISCHE PATENTSCHRIFT

(11) **EP 0 803 388 B1**
(45) Veröffentlichungstag und Bekanntmachung des Hinweises auf die Patenterteilung: **15.05.2002**
(21) Anmeldenummer: 97104652.9
(22) Anmeldetag: 19.03.1997
(51) Int. Cl.: B60H 1/00

(54) **Bedieneinheit für eine Heizungssanlage eines Kraftfahrzeugs**
Control unit for a heating device in a vehicle
Unité de commande pour une installation de chauffage pour véhicule

(30) Priorität: 27.04.1996 DE 19616965
(43) Veröffentlichungstag der Anmeldung: 29.10.1997
(73) Patentinhaber: Micro Compact Car smart GmbH, 71272 Renningen (DE)
(72) Erfinder: Heuberger, Jürgen, 72124 Pliezhausen (DE); Jeckel, Alfred, 72108 Rottenburg (DE); Schick, Ulrich, 72202 Nagold-Vollmaringen (DE)
(74) Vertreter: Weiss, Klaus

(56) Entgegenhaltungen:
- DE-A- 3 610 188
- US-A- 3 333 522
- US-A- 3 507 206

## Beschreibung

Die Erfindung betrifft eine Bedieneinheit für eine Heizungsanlage eines Kraftfahrzeugs, die im montierten Zustand in einem Cockpitbereich eines Fahrzeuginnenraumes angeordnet ist, und die mehrere Bedienelemente zur Steuerung verschiedener Funktionsbereiche der Heizungsanlage aufweist.

Es ist bekannt (DE 36 10 188 C2), eine Heizungsanlage für einen Personenkraftwagen vorzusehen, der im Fahrzeuginnenraum eine Bedieneinheit zur Ausführung verschiedener Klimatisierungsfunktionen zugeordnet ist. Klimatisierungsfunktionen sind dabei sowohl Heiz- als auch Kühlfunktionen, Gebläsefunktionen und Stellfunktionen für die verschiedenen Luftaustrittsöffnungen im Fahrzeuginnenraum. Die Bedieneinheit ist in einem Mittelbereich eines Cockpits des Personenkraftwagens vorgesehen. In Abstand oberhalb der Bedieneinheit ist ein Mitteldüsenauslaß vorgesehen, der ebenfalls Teil der Heizungsanlage ist. Dieser Mittelduse sind im Bereich der Austrittsöffnung Luftleitelemente zugeordnet, die eine manuelle Einstellung der Luftausströmung ermöglichen.

Aufgabe der Erfindung ist es, eine Bedieneinheit der eingangs genannten Art zu schaffen, die multifunktional aufgebaut und platzsparend im Fahrzeuginnenraum unterbringbar ist.

Diese Aufgabe wird dadurch gelöst, daß ein aus Kunststoff hergestelltes Bediengehäuse vorgesehen ist, in dem eine mit verstellbaren Luftleitelementen versehene Luftaustrittsdüse integriert ist, und das mit einstückig angeformten Aufnahmeanordnungen für alle Bedienelemente versehen ist. Dadurch wird eine äußerst kompakte Bedieneinheit geschaffen, in der sowohl die Mitteldüse als auch alle Bedienfunktionen zur Steuerung der Luftausströmung und der Klimatisierung des Fahrzeuginnenraumes integriert sind. An dem Bediengehäuse sind alle Bedienelemente zur Steuerung von Heiz-, Kühl-, Gebläse- und Luftverteilfunktionen bereits komplett vormontierbar, so daß sich für die Anordnung des Bediengehäuses im Cockpit eine äußerst einfache Montage ergibt. Die kompakte, einstückige Anordnung aller Bedienelemente an dem Bediengehäuse gestattet eine äußerst platzsparende Unterbringung im Fahrzeuginnenraum, wodurch insbesondere der Einsatz bei Kleinwagen vorteilhaft ist. Die kompakte und einstückige Bauweise gewährleistet zudem eine äußerst kostengünstige Herstellung und Montage. Jede Aufnahmeanordnung kann erfindungsgemäß aus einem oder mehreren einstückig angeformten Aufnahmeelementen bestehen, wobei sich die Aufnahmeelemente einer einzelnen Aufnahmeanordnung zweckmäßig für die Positionierung der jeweiligen Mechanik oder Elektrik des korrespondierenden Bedienelementes ergänzen.

In Ausgestaltung der Erfindung ist das Bediengehäuse mit einstückig angespritzten Halteelementen zur Festlegung des Bediengehäuses in dem Cockpitbereich des Fahrzeuginnenraumes versehen. Die Befestigung des Bediengehäuses im Cockpit wird durch diese Ausgestaltung wesentlich vereinfacht.

In weiterer Ausgestaltung der Erfindung sind Positionierelemente zum Aufsetzen von wenigstens einem Verkleidungsteil an dem Bediengehäuse einstückig angespritzt. Dadurch sind auch für die an die Cockpitkontur angepaßte Verkleidung des Bediengehäuses keine oder nur wenige zusätzliche Befestigungselemente notwendig.

In weiterer Ausgestaltung der Erfindung sind sowohl einstückig angespritzte Aufnahmeanordnungen für mechanische Stellelemente als auch einstückig angespritzte Aufnahmeanordnungen für die Halterung elektrischer oder elektronischer Bauelemente vorgesehen. Dadurch sind sowohl mechanische als auch elektrische und elektronische Stellfunktionen für die Heizungsanlage in dem Bediengehäuse integrierbar.

In weiterer Ausgestaltung der Erfindung ist wenigstens eine Aufnahmeanordnung für ein elektrisches Schaltelement zur Steuerung von wenigstens einer zusätzlichen Betriebsfunktion des Kraftfahrzeugs vorgesehen. Dadurch wird die Vielfalt der im Bediengehäuse integrierten Funktionen weiter erhoht.

Weitere Vorteile und Merkmale der Erfindung ergeben sich aus den Unteransprüchen sowie aus der nachfolgenden Beschreibung von bevorzugten Ausführungsbeispielen der Erfindung, die anhand der Zeichnungen dargestellt sind.
- Fig. 1: zeigt in perspektivischer Darstellung eine erste Ausführung einer erfindungsgemäßen Bedieneinheit für eine Heizungsanlage, wobei das Bediengehäuse mit einer auf einen Cockpitbereich eines Fahrzeuginnenraumes eines Personenkraftwagens abgestimmten Verkleidung versehen ist,
- Fig. 2: eine perspektivische Darstellung einer weiteren Ausführungsform eines Bediengehäuses für eine erfindungsgemäße Bedieneinheit ähnlich Fig. 1, jedoch ohne Verkleidung, und
- Fig. 3: eine perspektivische Ansicht der Unterseite des Bediengehäuses nach Fig. 2.

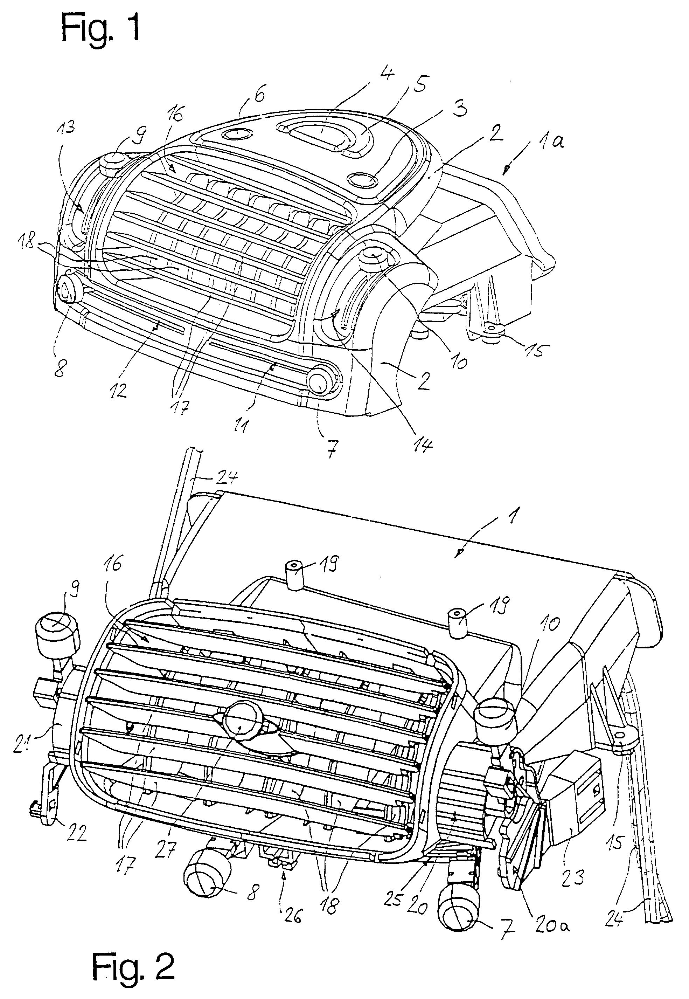

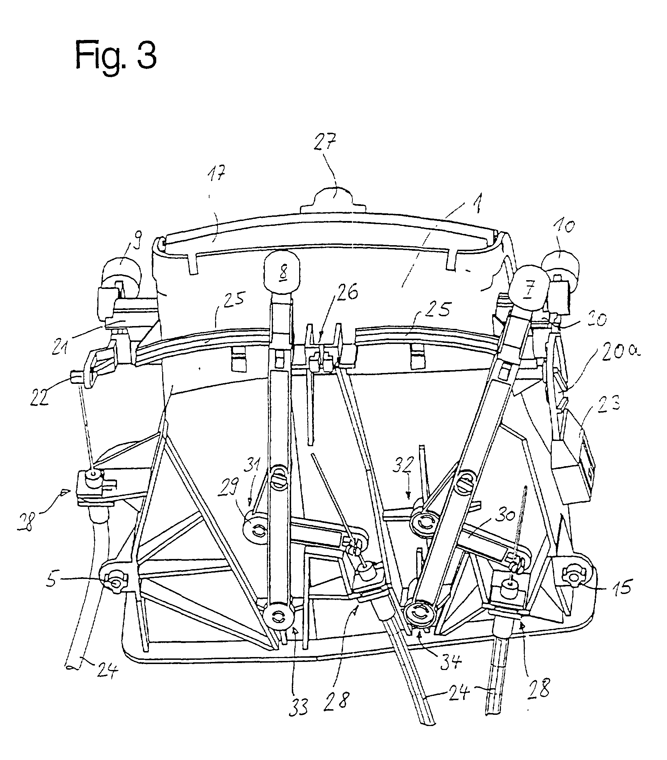

Eine in ihrer Gesamtheit in den Zeichnungen nicht dargestellte Heizungsanlage eines Personenkraftwagens weist sowohl Heiz- als auch Kühlfunktionen auf, die allgemein als Klimatisierungsfunktionen bezeichnet sind. Der grundsätzliche Aufbau der Heizungsanlage entspricht dem Stand der Technik. Die Heizungsanlage weist eine zentrale Bedieneinheit (1a) auf (Fig. 1), die im Cockpitbereich eines Fahrzeuginnenraumes auf Höhe der Fahrzeugmitte angeordnet ist. In der zentralen Bedieneinheit (1a) sind sowohl alle zur Steuerung der Heizungsanlage notwendigen Bedienfunktionen - wie nachfolgend beschrieben - als auch eine Mitteldüse (16) mit allen zugehörigen Bedienelementen integriert. Die zentrale Bedieneinheit nach Fig. 1 entspricht in ihrem Aufbau und in ihren Funktionsbereichen der anhand der Fig. 2 und 3 dargestellten zentralen Bedieneinheit. Lediglich im Design und der äußeren Gestaltung unterscheiden sich die Bedieneinheiten der Fig. 1 bzw. der Fig. 2 und 3. Die nachfolgende, detaillierte technische Beschreibung gilt daher für beide in den Zeichnungen dargestellte Ausgestaltungen.

Die zentrale Bedieneinheit nach Fig. 1 weist ein einstückig aus Kunststoff hergestelltes Bediengehäuse (1a) auf. Die zentrale Bedieneinheit nach den Fig. 2 und 3 weist ein korrespondierendes, ebenfalls einstückig aus Kunststoff hergestelltes Bediengehäuse (1) auf. Das Bediengehäuse (1; 1a) ist kasten- oder kassettenartig gestaltet und weist einen Luftführungskanal für die Mitteldüse (16) auf, der sich durch das gesamte Bediengehäuse (1a) erstreckt. Das Bediengehäuse (1, 1a) ist sowohl zu seiner in den Fahrzeuginnenraum ragenden Vorderseite als auch zu seiner an ein Heizungsgehäuse der Heizungsanlage anschließenden Rückseite hin offen, um die Luftführung zur Mitteldüse (16) und in den Fahrzeuginnenraum zu ermöglichen. Die zum Fahrzeuginnenraum hin weisende Austrittsöffnung der Mitteldüse (16) ist mit horizontalen Luftleitelementen (17) sowie mit vertikal ausgerichteten Luftleitelementen (18) versehen, wobei die vertikalen Luftleitelemente (18) und die horizontalen Luftleitelemente (17) jeweils mittels eines gemeinsamen Stellknopfes (27) (Fig. 2) manuell verschwenkbar sind. Dabei dienen die vertikalen Luftleitelemente (18) zur horizontalen Steuerung der Luftströmung und die horizontal ausgerichteten Luftleitelemente (17) zur vertikalen Ausrichtung der durch die Mitteldüse (16) austretenden Luftströmung.

An einer Oberseite des Bediengehäuses (1, 1a) sind zwei nach oben ragende Aufnahmezapfen (19) angeformt, die zur Festlegung und Positionierung einer elektrischen Schaltplatte dienen. Dieser Schaltplatte sind vier elektrische Schaltknöpfe (3, 4, 5, 6) zugeordnet, die in einer auf das Bediengehäuse (1a) aufsetzbaren Kunststoffverkleidung (2) integriert sind. Alle vier Schaltknöpfe (3, 4, 5, 6) sind jeweils mittels der Schaltplatte an einen Schaltkreis zur Steuerung verschiedener Betriebsfunktionen des Personenkraftwagens angeschlossen, wobei der Schaltplatte in nicht dargestellter Weise die zu den verschiedenen Betriebsfunktionen führenden Steckanschlüsse zugeordnet sind. Beim Ausführungsbeispiel nach Fig. 1 dient der Schaltknopf (3) zur Einschaltung des Kühlkompressors und damit zur Betätigung der Kuhlanlage. Der Schalttaster (4) dient zum Ein- und Ausschalten einer Warnblinkanlage. Der Taster (5) betätigt eine Zentralverriegelung des Personenkraftwagens und der Druckknopf (6) betätigt eine heizbare Heckscheibe des Personenkraftwagens. Die als Bedienelemente dienenden Schaltknöpfe (4 bis 6) stellen Zusatzfunktionen für das Kraftfahrzeug dar, da sie nicht den Betrieb der Heizungsanlage betreffen.

Die Verkleidung (2) ist vor dem Bediengehäuse (1a) nach vorne heruntergezogen und überdeckt vier Stellhebel (7, 8, 9, 10), wobei zwei Stellhebel (7, 8) unterhalb der Mitteldüse (16) horizontal verschiebbar ausgeführt sind. Die beiden anderen Stellhebel (9 und 10) flankieren die Mitteldüse (16) und sind in einer vertikalen Ebene auf einer kreisbogenförmigen Bewegungsbahn verschiebbar. Allen Stellhebeln (7, 8, 9, 10) sind einstuckig angespritzte Aufnahmeanordnungen zur Lagerung, Führung und Begrenzung der Stellhebel zugeordnet. Der Stellhebel (7) stellt einen Moduswahlhebel dar, der entsprechende Luftklappen der Heizungsanlage zur Verteilung der Luft zur Windschutzscheibe, in den Fußraum und zu den Seitenscheiben steuert. Der Stellhebel (8) steuert eine Mischklappe im Heizungsgehäuse an, die die Temperatureinstellung und damit den Anteil von warmer und kalter Luftströmung bestimmt. Der Stellhebel (9) steuert eine Klappe an, die den Umluft- und Frischluftbetrieb steuert. Der Stellhebel (10) dient zum Einund Ausschalten eines Gebläses sowie zum Einstellen der verschiedenen Gebläsestufen.

Der Stellhebel (7) ragt an der Unterseite des Bediengehäuses (1) entlang (Fig. 3) und ist im Bereich der Gehäuserückseite an einer einstückig angespritzten Lagerstelle (34) schwenkbar gelagert. Der Stellhebel (7) ist somit in einer horizontalen Ebene um die Lagerachse der Lagerstelle (34) schwenkbeweglich. Zur Führung des Stellhebels (7) in seinem vorderen Bereich ist eine stegartige, kreisbogenförmige Führungsschiene (25) vorgesehen, die ebenfalls einstückig am Bediengehäuse (1) angespritzt ist. Die Führungsschiene (25) weist gleichzeitig auch die Endanschläge zur Begrenzung der Schwenkbewegung des Stellhebels (7) auf. Zur Ansteuerung der Luftklappen der Heizungsanlage ist dem Stellhebel (7) zudem ein Winkelhebel (30) zugeordnet, der über einen Bowdenzug (24) mit der entsprechenden Klappe der Heizungsanlage verbunden ist. Der Winkelhebel (30) ist an einer einstückig am Bediengehäuse (1) angespritzten Aufnahmestelle (32) schwenkbeweglich gelagert. Die Führungsschiene (25), die Lagerstelle (34) und die Aufnahmestelle (32) sind Teile der Aufnahmeanordnung zur mechanischen Verstellung des Stellhebels (7). Für den Bowdenzug (24), der dem Stellhebel (7) über den Winkelhebel (30) zugeordnet ist, ist eine Zugaufnahme (28) vorgesehen, die ebenfalls einstückig am Gehäuse angespritzt ist. Diese Zugaufnahme (28) dient zur Zugentlastung des Bowdenzugs (24).

Die Aufnahmeanordnung für den Stellhebel (8) entspricht in ihrem Aufbau der Aufnahmeanordnung für den Stellhebel (7), in dem ebenfalls eine Lagerstelle (33) für den Stellhebel (8) und eine Führungsschiene (25) vorgesehen sind. Zur Ansteuerung der entsprechenden Mischklappe ist ein Winkelhebel (29) vorgesehen, der über einen Bowdenzug (24) die Mischklappe ansteuert. Der Winkelhebel (29) ist an einer einstückig angespritzten Aufnahmestelle (31) schwenkbeweglich gelagert und über einen Mitnehmer mit dem Stellhebel (8) verbunden. Auch die Zugaufnahme (28) ist in ihrer Funktion identisch zu der Zugaufnahme (28) für den Bowdenzug (24) des Stellhebels (7).

Der als Umluft/Frischluftschalter dienende Stellhebel (9) weist eine seitlich am Bediengehäuse (1) angeformte Aufnahme (21) auf, an der er schwenkbeweglich gelagert ist. Die Aufnahme (21) weist eine kranzartige Führung für den Stellhebel (9) auf, die koaxial zur Schwenkachse des Stellhebels (9) ausgerichtet ist und zwei Endanschläge für die beiden Stellpositionen des Stellhebels (9) aufweist. Zur Ansteuerung der entsprechenden Umluft/Frischluftklappe weist der Stellhebel (9) einen nach unten ragenden Hebelfortsatz (22) auf, mit dem ein Ende eines Bowdenzuges (24) verbunden ist. Der zu der entsprechenden Umluft/Frischluftklappe führende Bowdenzug (24) ist ebenfalls mit einer seitlich am Bediengehäuse (1) angeordneten Zugaufnahme (28) zur Zugentlastung und zur definierten Führung des Bowdenzuges (24) versehen. Auch die Zugaufnahme (28) ist einstückig am Bediengehäuse (1) angespritzt.

Der Stellhebel (10) ist analog dem Stellhebel (9) an der gegenüberliegenden Seite des Bediengehäuses (1) mittels einer einstückig angespritzten Aufnahme (20) an dem Bediengehäuse (1) schwenkbeweglich gelagert. Die Aufnahme (20) weist ähnlich der Aufnahme (21) eine kranzartige Führung auf, die jedoch mit vier Rastpositionen für den Stellhebel (10) versehen ist. Die vier Rastpositionen stellen die unterschiedlichen Gebläsestufen dar, die mittels des Stellhebels (10) einstellbar sind. Zur Gewährleistung der elektrischen Schaltfunktion ist der Aufnahme (20) außerdem eine elektrische Schaltplatte (20a) zugeordnet, an deren Rückseite ein Stecker (23) vorgesehen ist. Durch den Stecker (23) ist es möglich, einen Steckkontakt mit dem Gebläse der Heizungsanlage zu erzeugen und so die Steuerung des Gebläses über den Stellhebel (10) zu ermöglichen.

Zur Festlegung des gesamten Bediengehäuses (1) in einem Cockpitbereich des Fahrzeuginnenraumes sind Fixier- oder Halteelemente (15 und 26) an der Unterseite des Bediengehäuses (1) angespritzt. Durch entsprechend korrespondierende Befestigungselemente im Cockpitbereich ist somit in einfacher Weise eine Montage des Bediengehäuses (1) möglich.

## Patentansprüche

1. Bedieneinheit für eine Heizungsanlage eines Kraftfahrzeugs, die im montierten Zustand in einem Cockpitbereich eines Fahrzeuginnenraumes angeordnet ist und die mehrere Bedienelemente zur Steuerung verschiedener Funktionsbereiche der Heizungsanlage aufweist,
**dadurch gekennzeichnet,**
**daß** ein aus Kunststoff hergestelltes Bediengehäuse vorgesehen ist, in dem eine mit verstellbaren Luftleitelementen versehene Luftaustrittsdüse zur Steuerung der in den Fahrzeuginnenraum austretenden Luftströmung integriert ist, und das mit einstückig angeformten Aufnahmeanordnungen für alle Bedienelemente versehen ist.

2. Bedieneinheit nach Anspruch 1,
**dadurch gekennzeichnet,**
**daß** das Bediengehäuse mit einstückig angespritzten Halteelementen zur Festlegung des Bediengehäuses in dem Cockpitbereich des Fahrzeuginnenraumes versehen ist.

3. Bedieneinheit nach einem der vorhergehenden Ansprüche,
**dadurch gekennzeichnet,**
**daß** Positionierelemente zum Aufsetzen von wenigstens einem Verkleidungsteil an dem Bediengehäuse einstuckig angespritzt sind.

4. Bedieneinheit nach Anspruch 1, 2 oder 3,
**dadurch gekennzeichnet,**
**daß** sowohl einstuckig angeformte Aufnahmeanordnungen für mechanische Stellelemente als auch einstückig angespritzte Aufnahmeanordnungen für die Halterung elektrischer oder elektronischer Bauelemente vorgesehen sind.

5. Bedieneinheit nach einem der vorhergehenden Ansprüche,
**dadurch gekennzeichnet,**
**daß** Aufnahmen (28) zur Fixierung und Zugentlastung von Bowdenzügen (24) einstückig angespritzt sind.

6. Bedieneinheit nach Anspruch 4,
**dadurch gekennzeichnet,**
**daß** die Aufnahmeanordnungen Führungen für die mechanischen Stellelemente aufweisen.

7. Bedieneinheit nach Anspruch 4,
**dadurch gekennzeichnet,**
**daß** die Aufnahmeanordnungen Lagerstellen für bewegliche Stellhebel aufweisen.

8. Bedieneinheit nach Anspruch 4,
**dadurch gekennzeichnet,**
**daß** die Aufnahmeanordnungen für die mechanischen Stellelemente Endanschläge für die Endpositionen der Stellelemente aufweisen.

9. Bedieneinheit nach einem oder mehreren der vorhergehenden Ansprüche,
**dadurch gekennzeichnet,**
**daß** wenigstens eine Aufnahmeanordnung für ein elektrisches Schaltelement zur Steuerung von wenigstens einer zusätzlichen Betriebsfunktion des Kraftfahrzeugs vorgesehen ist.

## Claims

1. Control unit for a heating system of a motor vehicle which, in the assembled state, is disposed in the dashboard region of a vehicle interior and has several operating elements for controlling different operating regions of the heating system,
**characterised in that**
a control housing made from plastics is provided, in which an air outlet vent provided with adjustable air guide elements for controlling the air flow discharged into the vehicle interior is integrated and which is provided with integrally moulded mounting systems for all operating elements.

2. Control unit as claimed in claim 1,
**characterised in that**
the control housing is provided with integrally moulded retaining elements for fitting the control housing in the dashboard region of the vehicle interior.

3. Control unit as claimed in one of the preceding claims,
**characterised in that**
positioning elements for fitting at least one facing panel are integrally moulded on the control housing.

4. Control unit as claimed in claim 1, 2 or 3,
**characterised in that**
both integrally moulded mounting systems for mechanical setting elements and integrally moulded mounting systems for holding electrical or electronic components are provided.

5. Control unit as claimed in one of the preceding claims,
**characterised in that**
integrally moulded mountings (28) for fixing and relieving the tension on Bowden cables (24) are provided.

6. Control unit as claimed in claim 4,
**characterised in that**
the mounting systems have guides for the mechanical selector elements.

7. Control unit as claimed in claim 4,
**characterised in that**
the mounting systems have bearing points for displaceable selector levers.

8. Control unit as claimed in claim 4,
**characterised in that**
the mounting systems for the mechanical selector elements have end stops for the end positions of the selector elements.

9. Control unit as claimed in one or more of the preceding claims,
**characterised in that**
at least one mounting system is provided for an electric circuit board to control at least one additional operating function of the motor vehicle.

## Revendications

1. Unité de commande pour une installation de chauffage d'un véhicule motorisé qui, à l'état monté, est disposée dans une zone de l'avant d'un habitacle de véhicule et qui présente plusieurs éléments de commande pour la commande des différents domaines de fonction de l'installation de chauffage, **caractérisée par le fait qu'**est prévu un capot de service, fabriqué en plastique, dans lequel est intégré une buse de sortie d'air comportant des éléments, réglables, de guidage de l'air pour la commande du flux d'air sortant dans l'habitacle du véhicule et qui comporte des dispositifs récepteurs, formés d'une pièce avec le capot, pour tous les éléments de commande.

2. Unité de commande selon la revendication 1, **caractérisée par le fait que** le capot de service comporte des éléments de maintien pour la fixation du capot de service dans la zone avant de l'habitacle du véhicule.

3. Unité de commande selon l'une des revendications précédentes, **caractérisée par le fait que** les éléments de positionnement prévus pour placer au moins une portion de revêtement sur le capot de service sont coulés par injection, d'une pièce avec ce capot.

4. Unité de commande selon la revendication 1, 2 ou 3, **caractérisée par le fait que** sont prévus aussi bien des dispositifs récepteurs, coulés d'une pièce avec le capot, pour des éléments réglants mécaniques que des dispositifs récepteurs, coulés par injection, d'une pièce avec le capot, pour le maintien de composants électriques ou électroniques.

5. Unité de commande selon l'une des revendications précédentes, **caractérisée par le fait que** sont coulés par injection, d'une pièce avec le capot, des réceptacles (28) pour la fixation et la décharge de traction de câbles coulissants sous gaine (24).

6. Unité de commande selon la revendication 4, **caractérisée par le fait que** les dispositifs récepteurs présentent des guides pour les éléments réglants mécaniques.

7. Unité de commande selon la revendication 4, **caractérisée par le fait que** les dispositifs récepteurs présentent des portées pour des leviers réglants mobiles.

8. Unité de commande selon la revendication 4, **caractérisée par le fait que** les dispositifs récepteurs prévus pour les éléments réglants mécaniques présentent des butées d'extrémité pour les positions d'extrémité des éléments réglants.

9. Unité de commande selon une ou plusieurs des revendications précédentes, **caractérisé par le fait qu'**au moins un dispositif récepteur pour un éléments de commutation électrique est prévu pour la commande d'au moins une fonction de service supplémentaire du véhicule motorisé.
